# EUROPEAN PATENT SPECIFICATION

(11) **EP 3 468 133 B1**
(45) Date of publication and mention of the grant of the patent: **17.03.2021**
(21) Application number: 17806960.5
(22) Date of filing: 29.05.2017
(51) Int. Cl.: H04L 29/06, H04L 29/08, H04L 9/32

(54) **METHOD AND APPARATUS FOR PROVIDING P2P DATA SECURITY SERVICE IN IOT ENVIRONMENT**
VERFAHREN UND VORRICHTUNG ZUR BEREITSTELLUNG EINES P2P-DATENSICHERHEITSDIENSTES IN EINER IOT-UMGEBUNG
PROCÉDÉ ET APPAREIL POUR FOURNIR UN SERVICE DE SÉCURITÉ DE DONNÉES P2P DANS UN ENVIRONNEMENT IOT

(30) Priority: 30.05.2016 KR 20160066494
(43) Date of publication of application: 10.04.2019
(73) Proprietor: Alticast Corporation, Seoul 06655 (KR)
(72) Inventor: CHO, Mi Sung, Seoul 04098 (KR); JUNG, Byung Kwan, Seoul 05090 (KR)
(74) Representative: M. Zardi & Co S.A.
(86) International application number: PCT/KR2017/005577
(87) International publication number: WO 2017/209467

(56) References cited:
- KR-A- 20140 045 829
- KR-A- 20160 000 455
- KR-A- 20160 020 816
- KR-A- 20160 054 662
- US-A1- 2008 072 037
- US-A1- 2016 088 478
- US-B2- 7 068 789

## Description

### CROSS-REFERENCE TO RELATED APPLICATIONS

This application is a National Phase Application of PCT International Application No. PCT/KR2017/005577, which was filed on May 29, 2017, and which claims priority from Korean Patent Application No. 10-2016-0066494 filed with the Korean Intellectual Property Office on May 30, 2016.

### BACKGROUND

### 1. Technical Field

The present invention relates to a method and apparatus for providing a P2P data security service in an IoT environment.

### 2. Description of the Related Art

The Internet of Things (IoT) refers to technology that involves equipping various objects with built-in sensor and communication functions to connect the objects to the Internet. Here, such objects may include various embedded devices such as household appliances, mobile terminals, wearable computers, etc.

The objects connected to the Internet of things may each have a unique IP for differentiating itself in connecting to the Internet and can include a built-in sensor for acquiring data from the external environment.

In recent times, mobile terminals carried by users support applications for controlling various devices in the home.

As noted above, the IoT technology provides convenience by connecting all sorts of objects to a network to enable remote controlling, but as the objects may also become targets of hacking, security becomes a critical problem that needs solving.

Here, security refers to protecting P2P (peer-to-peer) data in an E2E (end-to-end) based IoT environment.

Performing authentication for the mobile terminal and the respective household appliances by engaging an authentication server, in order to maintain security in an IoT environment, poses the problem of great inefficiency, since a connection to the authentication server is required during a P2P communication connection.

Moreover, there are many cases in which the household appliances are not actually connected to the Internet and are thus unable to access an authentication server.

US 7 068 789 and US 2008/072037 are examples of methods for providing P2P data security.

### SUMMARY OF THE INVENTION

To resolve the problems of the related art described above, an aspect of the present invention proposes a method and apparatus for providing a P2P data security service in an IoT environment that allow efficient communication in an IoT environment while maintaining security. The invention is disclosed by the independent claims. The dependent claims disclose further embodiments.

Other objectives of the present invention can be derived by the skilled person from the embodiments set forth below.

To achieve the objectives above, the present invention provides a method for providing a P2P data security service in an IoT environment between devices in an IoT platform connected over a network with a plurality of devices, where the method includes: authenticating a first device by using at least one of an authentication certificate or a unique key of the first device; assigning a group ID and group key to the first device after establishing a secure channel with the first device when the authenticating of the first device is completed; and assigning the group ID and group key to a second device requested by the first device, and further including the features of claim 1.

The operation of assigning the group ID and group key to the first device can be performed by way of an E2E (end-to-end) session key exchange.

The operation of assigning the group ID and group key to the second device can be performed when the second device accesses the IoT platform by way of a token sent from the first device.

The first device and the second device can transmit and receive authentication data encrypted by way of the group key, store each other's virtual device ID when the encrypted authentication data is decrypted, and establish a secure channel by way of a P2P session key exchange after storing the virtual device ID.

The group ID can be a master group ID, and a sub-group of a third device for controlling the second device can be configured by a change in authority setting of the first device.

The method can further include, prior to the authenticating of the first device: verifying a token from the first device accessing a server of a service provider, where the token is provided to the first device by the server; and sending the authentication certificate to the first device when the verifying of the token is completed.

The IoT platform can include an authentication server, which may be configured to authenticate the first device, and a certificate download server, which may be configured to send an authentication certificate to the first device.

The second device can store an authentication certificate, which may be assigned beforehand during the manufacturing process or provided by way of provisioning with the IoT platform.

The first device can be a mobile terminal or a home server, while the second device can be multiple devices that are located in a home and controlled by the mobile terminal or home server.

Another aspect of the present invention provides a computer program stored in a medium that contains a series of instructions for performing the method above.

Still another aspect of the present invention provides an apparatus for providing a P2P data security service in an IoT environment according to claim 9.The apparatus is connected over a network with a multiple number of devices and includes a processor and a memory connected by the processor, and where the memory stores program instructions that are executable by the processor to authenticate a first device by exchanging at least one of an authentication certificate and a unique key with the first device, establish a secure channel with the first device when the authenticating is completed, assign a group ID and group key to the first device, and assign the group ID and group key to a second device requested by the first device.

Yet another aspect of the present invention provides a device connected over a network with an authentication server in an IoT environment according to claim 10. The device includes a processor and a memory connected by the processor, and where the memory stores program instructions that are executable by the processor to receive authentication from the authentication server by way of at least one of a pre-stored authentication certificate and a unique key, establish a secure channel with the authentication server when the authentication is completed, receive and store a group ID and group key from the authentication server, and send a token to another device to allow the other device to be assigned the group ID and group key from the authentication server.

An embodiment can provide the advantage of enabling P2P data security in an IoT environment with a convenient method by adopting a group key for devices for which authentication has been completed by an authentication server.

### BRIEF DESCRIPTION OF THE DRAWINGS

FIG. 1 illustrates the composition of a system for providing a P2P security service in an IoT environment as disclosed.
FIG. 2 is a flow diagram illustrating the process of assigning an authentication certificate to a device according to an embodiment as disclosed.
FIG. 3 is a flow diagram illustrating the process of assigning a group ID according to an embodiment as disclosed.
FIG. 4 is a flow diagram illustrating the process of configuring a P2P session between different devices according to an embodiment as disclosed.
FIG. 5 is a flow diagram illustrating the process of configuring a sub-group according to an embodiment as disclosed.
FIG. 6 illustrates the detailed composition of an authentication server according to an embodiment as disclosed.
FIG. 7 illustrates the detailed composition of a device according to an embodiment as disclosed.

### DETAILED DESCRIPTION OF THE INVENTION

As the invention allows for various changes and numerous embodiments, particular embodiments will be illustrated in the drawings and described in detail in the written description. However, this is not intended to limit the present invention to particular modes of practice, and it is to be appreciated that all changes, equivalents, and substitutes that do not depart from the scope of the claims are encompassed in the present invention. In describing the drawings, similar reference numerals are assigned to similar components.

Certain embodiments of the present invention are described below in more detail with reference to the accompanying drawings.

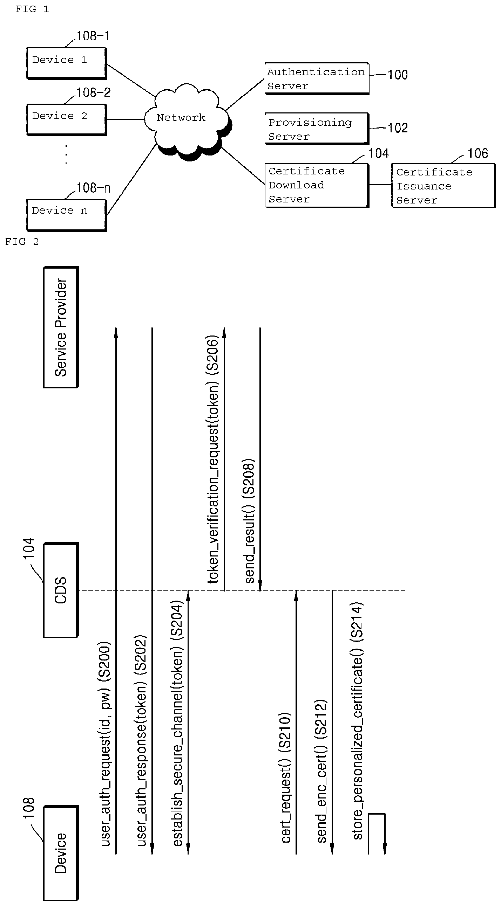

FIG. 1 illustrates the composition of a system for providing a P2P security service in an IoT environment according to an embodiment.

As illustrated in FIG. 1, a system based on this embodiment can include an authentication server 100, a provisioning server 102, a certificate download server 104, and a certificate issuance server 106.

In the present specification, the multiple number of servers mentioned above are defined as an IoT platform in that these servers provide a service for enabling security in communications between individual devices in an IoT environment.

While FIG. 1 illustrates the IoT platform as being composed of multiple servers, this is an example only, and other examples in which a single server provides the P2P data security service can be regarded as being within the scope of the present invention.

In the IoT platform, the authentication server 100 and the certificate download server 104 may be connected over a network with devices 108. The network can include wired or wireless Internet, mobile communication networks, etc.

The authentication server 100 may perform an authentication process for accessed devices and may assign a virtual device ID, a group ID, and a group key to a device having an authentication certificate.

The provisioning server 102 may perform subscriber/device management and may manage the authentication certificate assigned to each device.

The certificate download server 104 may cooperate with the authentication server 100 to send the authentication certificate to devices of which verification has been completed.

Preferably, when a device 108 logs in to the service provider (e.g. a web portal company server) with an ID and password, the certificate download server 104 may verify the device 108 by way of a token which the device 108 received from the authentication server 100.

The certificate issuance server 106 may cooperate with the provisioning server 102 to issue an authentication certificate for a particular device.

According to an embodiment, when a first device 108-1 requests a group configuration with another second device 108-2, the authentication server 100 may assign a virtual device ID to the second device 108-2 and also assign the same group ID and group key as those assigned to the first device 108-1.

According to an embodiment, multiple devices that have been assigned the same group ID and group key may authenticate one another and establish secure channels by using the group key for the group ID when exchanging P2P data, without having to access the authentication server 100.

The first device 108-1 according to this embodiment can be a mobile terminal, laptop, tablet PC, or desktop PC which supports a network connection and on which applications can be installed.

The second device 108-2 can include in-home household appliances and other electronic/electric devices.

A more detailed description is provided below of the process by which to provide a P2P data security service in an IoT environment, with reference to the relevant drawings.

FIG. 2 is a flow diagram illustrating the process of assigning an authentication certificate to a device according to an embodiment.

Referring to FIG. 2, a device 108 may send an ID and password to the service provider (operation 200).

For example, the service provider can be the web server of a company that provides a portal service (e.g. NAVER, GOOGLE, etc.). However, the present invention is not limited thus, and the service provider can be a server that can be accessed by a mobile terminal through an application.

If the ID/password match the information for a user registered beforehand, the service provider may send an authentication response, which may include a token, to the device 108 (operation 202).

Afterwards, the device 108 and the certificate download server 104 may establish a secure channel by way of the token (operation 204).

The certificate download server 104 may request that the service provider verify the token (operation 206), and the service provider may send the verification result to the certificate download server 104 (operation 208).

If the verification of the token is complete, the device 108 may request an authentication certificate from the certificate download server 104 (operation 210), and the certificate download server 104 may send the authentication certificate issued at the certificate issuance server 106 (operation 212).

Afterwards, the device 108 may store the authentication certificate (operation 214).

FIG. 2 illustrates a process performed for a device 108 that does not have an authentication certificate stored beforehand, and in cases where the device is a mobile terminal, the procedure for downloading the authentication certificate can be performed when logged in to the service provider.

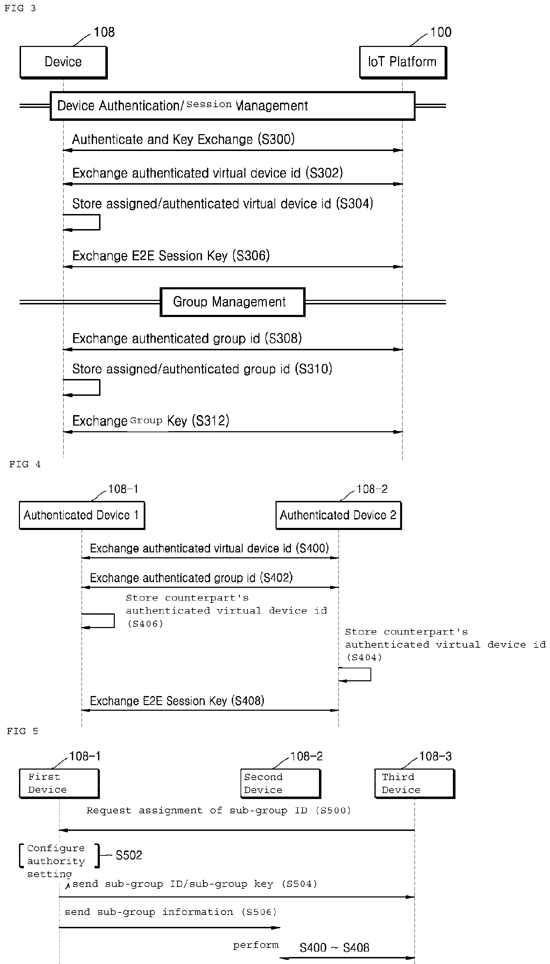

FIG. 3 is a flow diagram illustrating the process of assigning a group ID according to an embodiment.

The device in FIG. 3 can be a device that has stored an authentication certificate through the process illustrated in FIG. 2 or has had an authentication certificate built in beforehand during the manufacturing process.

In FIG. 3, the IoT platform can be an authentication server 100.

Referring to FIG. 3, the device 108 and the authentication server 100 may perform authentication and session management.

More specifically, the authentication server 100 may authenticate the device 108 by using at least one of a unique key and an authentication certificate stored by the device 108 beforehand through the process of FIG. 2 (operation 300).

When the authentication of the device 108 is complete, the authentication server 100 may send a virtual device ID to the device 108 (operation 302).

The device 108 may store the assigned virtual device ID (operation 304).

Afterwards, the authentication server 100 and the device 108 may establish a secure channel by way of an E2E session key exchange (operation 306).

Operation 306 may mean that the authentication server 100 and the device 108 transmit and receive data after encrypting with an E2E session key.

After establishing the secure channel, the authentication server 100 may send a group ID to the device 108 (operation 308).

The device 108 may store the group ID sent from the authentication server 100 in an encrypted form after decrypting the group ID with the E2E session key (operation 310).

Next, the authentication server 100 and the device 108 may exchange the group key (operation 312). Here, the group key may be a key for determining whether or not different devices belong to the same group and may be used by the devices to authenticate one another.

In operation 312, the authentication server 100 may send the group key to the device 108, and the device 108 may store the group key.

According to this embodiment, in cases where the device 108 is a mobile terminal carried by a user, the mobile terminal having an authentication certificate stored beforehand can access the authentication server 100 to be assigned a group ID and group key.

In cases where the device 108 is a household appliance installed in the home, the device 108 can receive a token from a mobile terminal that has already been assigned a group ID and can access the authentication server 100 by way of the token to be assigned the same group ID as that of the mobile terminal.

The process of assigning a group ID via a token can be performed not only upon request through a mobile terminal but also upon request by a master device (e.g. home server) connected with the in-home household appliances.

FIG. 4 is a flow diagram illustrating the process of configuring a P2P session between different devices according to an embodiment.

FIG. 4 illustrates a process that may be performed when authentication by the authentication server 100 has been completed beforehand, with the process performed between devices that have been assigned virtual device ID's and group ID's.

Referring to FIG. 4, the first device 108-1 and the second device 108-2 may exchange virtual device ID's (operation 400).

Also, the first device 108-1 and the second device 108-2 may exchange group ID's (operation 402).

In operation 402, the first device 108-1 may encrypt authentication data with a first group key corresponding to a pre-stored group ID and send the encrypted authentication data to the second device 108-2, and the second device 108-2 may decrypt the received authentication data with a second group key corresponding to its own group ID. Here, the authentication data can be a randomly generated number.

If the decryption is successful, the second device 108 may store the virtual device ID of the first device 108-1 (operation 404).

Also, in operation 402, the second device 108-2 may encrypt authentication data with the second group key and send the encrypted authentication data to the first device 108-1.

When the first device 108-1 decrypts the encrypted authentication data by using the first group key, the first device 108-1 may store the virtual device ID of the second device 108-2 (operation 406).

That is, since the first group key and the second group key would be the same if the first device 108-1 and the second device 108-2 belong to the same group, the authentication data can be decrypted each with its own group key.

Through the process described above, the mutual authentication of the first and second devices 108-1 and 108-2 may be completed.

After the mutual authentication is complete, the first device 108-1 and second device 108-2 may exchange P2P session keys (operation 408).

Here, a P2P session key may be a key used for encryption and decryption when transmitting and receiving data to and from each other, and by way of the P2P session keys, the security of the P2P data can be maintained between the first device 108-1 and the second device 108-2.

According to an embodiment, the group ID generated in response to a request made by the first device 108-1 to the authentication server 100 for a group configuration with the second device 108-2 can be a master group ID, and the first device 108-1 may be defined as a master device that controls the second device 108-2. However, the setup can support an arrangement that allows a third device 108-3 of another user, other than the first device 108-1, to control the second device 108-2.

FIG. 5 is a flow diagram illustrating the process of configuring a sub-group according to an embodiment.

FIG. 5 illustrates a process for configuring a sub-group between a third device 108-3 of another user and a second device 108-2 that has been configured to be of the same group as the first device 108-1.

The process of FIG. 5 may be performed when the first device 108-1 changes the authority setting of the second device 108-2 according to a request by another user. Also, the third device 108-3 can have already stored an authentication certificate through the process of FIG. 2 and have already been assigned a group ID and group key through the process of FIG. 3.

According to an embodiment, when the first device 108-1 and the second device 108-2 are configured to the same group, a "do not permit sub-groups" setting can be configured as the default authority setting.

Here, a change in the authority setting may refer to the user of the first device 108-1 changing the authority setting of the second device 108-2 to "permit sub-groups".

Referring to FIG. 5, the third device 108-3 may send initial access information to the second device 108-2 (operation 500).

The initial access information in operation 500 can include the ID of the third device, the serial number of the third device, validity check information of a pre-shared long term secret key (E(Kps, xxxx)), and validity check information of the device's unique private key (E(Kp, yyyy)).

The second device 108-2 may send a response to the initial access information (operation 502).

Afterwards, the third device 108-3 may send a group join request, including the group ID, to the second device 108-2 (operation 504).

The second device 108-2 may send a response to the group join request (operation 506).

Next, the third device 108-3 may send the group key to the second device 108-2 (operation 508), and the second device 108-2 may send a response to the third device 108-3 (operation 510).

After a sub-group is configured through the process of FIG. 5 for enabling the third device 108-3 to control the second device 108-2, the user of the first device 108-1 may change the authority setting of the second device 108-2 back to "do not permit sub-groups" in order to limit additional devices other than the third device 108-3 from being configured into the sub-group.

When the third device 108-3 as a sub-device controls the second device 108-2, some of the functions controlled by the master device can be restricted. For example, in cases where the second device 108-2 is a door lock, the third device 108-3 can be given authority to control only the basic functions of the door lock (e.g. the locking/unlocking function) but may not be given authority as regards other functions of the door lock such as changing the password or changing acceptable fingerprints.

If more control authority is desired, the first device 108-1 can selectively permit control authority over certain specific functions together with the "permit sub-groups" setting for the second device 108-2.

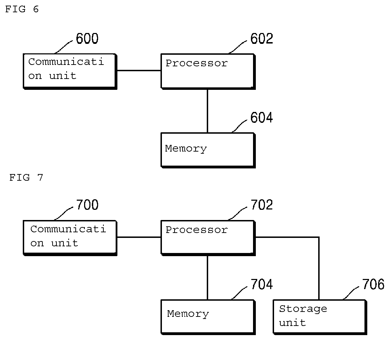

FIG. 6 illustrates the detailed composition of an authentication server according to an embodiment.

Referring to FIG. 6, an authentication server 100 according to this embodiment can include a communication unit 600, a processor 602, and a memory 604.

The communication unit 600 may receive from a device 108 data encrypted with a unique key of the device, and when device authentication is completed, may send the virtual device ID, group ID, and group key.

The processor 602 can include a CPU (central processing unit) or other virtual machine, etc., capable of executing a computer program.

The memory 604 can include a non-volatile memory device such as a fixed type hard drive or a detachable storage device. The detachable storage device can include a compact flash unit, USB memory stick, etc. The memory 604 can also include volatile memory such as various types of random access memory.

The memory 604 may store program instructions that can be executed by the processor 602.

To be more specific, the memory 604 of the authentication server 100 may store program instructions for authenticating a first device 108-1 by exchanging an authentication certificate and a unique key with the first device 108-1, establishing a secure channel by way of exchanging an E2E (end-to-end) session key when the authentication is completed, and assigning a group ID and group key to the first device 108-1.

Also, the memory 604 may store program instructions for assigning the group ID and group key to other devices (second devices 108-2) requested by the first device 108-1.

Here, the assigning of the group ID and group key to a second device 108-2 can be performed when the second device 108-2 accesses the authentication server 100 by way of a token sent by the first device 108-1.

FIG. 7 illustrates the detailed composition of a device according to an embodiment.

Referring to FIG. 7, a device according to this embodiment can include a communication unit 700, a processor 702, a memory 704, and a storage unit 706.

The communication unit 700 may communicate with the authentication server 100 to allow the execution of authentication procedures and may also transmit and receive data to and from other devices.

The processor 702 may perform an overall control process related to P2P data security in an IoT environment.

The memory 704 of the device may store program instructions for sending information needed for authentication to the authentication server 100 by way of an authentication certificate and a unique key stored in the storage unit 706, establishing a secure channel through an exchange of E2E (end-to-end) session keys when the authentication is complete, and storing in the storage unit 706 the first group ID and first group key received from the authentication server 100.

Also, the memory 704 of the device may store program instructions for sending a token to another device (second device 108-2) to allow the second device to be assigned the first group ID and first group key from the authentication server 100.

While the present invention has been described above using particular examples, including specific elements, by way of limited embodiments and drawings, it is to be appreciated that these are provided merely to aid the overall understanding of the present invention, the present invention is not to be limited to the embodiments above, and various modifications and alterations can be made from the disclosures above by a person having ordinary skill in the technical field to which the present invention pertains. Therefore, the scope of the present invention must not be limited to the embodiments described herein, and same must be regarded as encompassing not only the claims set forth below.

## Claims

1. A method for providing a peer-to-peer, P2P, data security service in an Internet of Things, IoT, environment between devices in an IoT platform connected over a network with a plurality of devices, the method comprising:
authenticating a first device by using at least one of an authentication certificate or a unique key of the first device;
assigning a group ID and group key to the first device after establishing a secure channel with the first device when the authenticating of the first device is completed; and
assigning the group ID and group key to a second device requested by the first device, wherein the first device is a mobile terminal and the second device is household appliance,
wherein the assigning of the group ID and group key to the second device is performed when the second device accesses the IoT platform by way of a token sent from the first device,
wherein the first device and the second device transmit and receive authentication data encrypted by way of the group key, store each other's virtual device ID when the encrypted authentication data is decrypted, and establish a secure channel by way of a P2P session key exchange after storing the virtual device ID.

2. The method for providing a P2P data security service in an IoT environment according to claim 1, wherein the assigning of the group ID and group key to the first device is performed by way of an E2E, end-to-end, session key exchange.

3. The method for providing a P2P data security service in an IoT environment according to claim 1, wherein the group ID is a master group ID, and a sub-group of a third device for controlling the second device is configured by a change in authority setting of the first device.

4. The method for providing a P2P data security service in an IoT environment according to claim 1, further comprising, prior to the authenticating of the first device:
verifying a token from the first device accessing a server of a service provider, the token provided to the first device by the server; and
sending the authentication certificate to the first device when the verifying of the token is completed.

5. The method for providing a P2P data security service in an IoT environment according to claim 1, wherein the IoT platform comprises an authentication server and a certificate download server, the authentication server configured to authenticate the first device, the certificate download server configured to send an authentication certificate to the first device.

6. The method for providing a P2P data security service in an IoT environment according to claim 1, wherein the second device stores an authentication certificate, the authentication certificate assigned beforehand during a manufacturing process or provided by way of provisioning with the IoT platform.

7. The method for providing a P2P data security service in an IoT environment according to claim 1, wherein the second device is a plurality of devices located in a home and controlled by the mobile terminal.

8. A computer program stored in a medium containing a series of instructions for performing the method of claim 1.

9. An apparatus for providing a P2P data security service in an IoT environment, the apparatus connected over a network with a plurality of devices, the apparatus comprising:
a processor; and
a memory connected by the processor,
wherein the memory stores program instructions executable by the processor to:
authenticate a first device by exchanging at least one of an authentication certificate and a unique key with the first device,
establish a secure channel with the first device when the authenticating is completed,
assign a group ID and group key to the first device, and
assign the group ID and group key to a second device requested by the first device,
wherein the first device is a mobile terminal and the second device is household appliance,
wherein the group ID and group key is assigned to the second device when the second device accesses the IoT platform by way of a token sent from the first device,
wherein the first device and the second device transmit and receive authentication data encrypted by way of the group key, store each other's virtual device ID when the encrypted authentication data is decrypted, and establish a secure channel by way of a P2P session key exchange after storing the virtual device ID.

10. A device connected over a network with an authentication server in an IoT environment, the device comprising:
a processor; and
a memory connected by the processor,
wherein the memory stores program instructions executable by the processor to:
receive authentication from the authentication server by way of at least one of a pre-stored authentication certificate and a unique key,
establish a secure channel with the authentication server when the authentication is completed,
receive and store a group ID and group key from the authentication server, and
send a token to another device to allow the other device to be assigned the group ID and group key from the authentication server,
wherein the device is a mobile terminal and the another device is household appliance,
wherein the memory stores program instructions executable by the processor to:
receive encrypted authentication data from the other device,
store a virtual device ID of the other device when the encrypted authentication data is decrypted, and
establish a secure channel by way of a P2P session key exchange after storing the virtual device ID.

## Patentansprüche

1. Verfahren zum Bereitstellen eines Peer-to-Peer-(P2P)-Daten-Sicherheits-Dienstes in einer Internet-of-Things-(IoT)-Umgebung zwischen Geräten in einer IoT-Plattform, die über ein Netzwerk mit einer Vielzahl von Geräten verbunden ist, wobei das Verfahren umfasst:
Authentifizieren eines ersten Geräts durch Verwenden eines Authentifizierungszertifikats und/oder eines einzigartigen Schlüssels des ersten Geräts;
Zuweisen einer Group-ID und eines Group-Schlüssels zu dem ersten Gerät nach Aufbauen eines sicheren Kanals mit dem ersten Gerät, wenn das Authentifizieren des ersten Geräts abgeschlossen ist; und
Zuweisen der Group-ID und des Group-Schlüssels zu einem von dem ersten Gerät angeforderten zweiten Gerät, wobei das erste Gerät ein mobiles Endgerät ist und das zweite Gerät ein Haushaltsgerät ist,
wobei das Zuweisen der Group-ID und des Group-Schlüssels zu dem zweiten Gerät durchgeführt wird, wenn das zweite Gerät über ein von dem ersten Gerät gesendetes Token auf die IoT-Plattform zugreift,
wobei das erste Gerät und das zweite Gerät über den Group-Schlüssel verschlüsselte Authentifizierungsdaten senden und empfangen, eine virtuelle Geräte-ID voneinander speichern, wenn die verschlüsselten Authentifizierungsdaten entschlüsselt sind, und über einen P2P-Sitzungs-Schlüssel-Austausch einen sicheren Kanal aufbauen, nachdem sie die virtuelle Geräte-ID gespeichert haben.

2. Verfahren zum Bereitstellen eines P2P-Daten-Sicherheits-Dienstes in einer IoT-Umgebung nach Anspruch 1, wobei das Zuweisen der Group-ID und des Group-Schlüssels zu dem ersten Gerät über einen E2E-(*End-to-End*)-Sitzungs-Schlüssel-Austausch durchgeführt wird.

3. Verfahren zum Bereitstellen eines P2P-Daten-Sicherheits-Dienstes in einer IoT-Umgebung nach Anspruch 1, wobei die Group-ID eine Master-Group-ID ist, und eine Sub-Group eines dritten Geräts zum Steuern des zweiten Geräts durch eine Änderung in einer Befugniseinstellung des ersten Geräts konfiguriert wird.

4. Verfahren zum Bereitstellen eines P2P-Daten-Sicherheits-Dienstes in einer IoT-Umgebung nach Anspruch 1, ferner umfassend, vor dem Authentifizieren des ersten Geräts:
Verifizieren eines Tokens von dem ersten Gerät, das auf einen Server eines Service-Providers zugreift, wobei das Token dem ersten Gerät durch den Server bereitgestellt wird; und
Senden des Authentifizierungszertifikats zu dem ersten Gerät, wenn das Verifizieren des Tokens abgeschlossen ist.

5. Verfahren zum Bereitstellen eines P2P-Daten-Sicherheits-Dienstes in einer IoT-Umgebung nach Anspruch 1, wobei die IoT-Plattform einen Authentifizierungs-Server und einen Zertifikat-Download-Server umfasst, wobei der Authentifizierungs-Server dazu konfiguriert ist, das erste Gerät zu authentifizieren, der Zertifikat-Download-Server dazu konfiguriert ist, ein Authentifizierungszertifikat an das erste Gerät zu senden.

6. Verfahren zum Bereitstellen eines P2P-Daten-Sicherheits-Dienstes in einer IoT-Umgebung nach Anspruch 1, wobei das zweite Gerät ein Authentifizierungszertifikat speichert, wobei das Authentifizierungszertifikat zuvor während eines Fertigungsprozesses zugewiesen oder über ein Provisioning mit der IoT-Plattform bereitgestellt wurde.

7. Verfahren zum Bereitstellen eines P2P-Daten-Sicherheits-Dienstes in einer IoT-Umgebung nach Anspruch 1, wobei das zweite Gerät eine Vielzahl von Geräten ist, die sich in einem Heim befinden und durch das mobile Endgerät gesteuert werden.

8. Computerprogramm, das in einem Medium gespeichert ist, und eine Reihe von Befehlen zum Durchführen der Verfahrens nach Anspruch 1 enthält.

9. Vorrichtung zum Bereitstellen eines P2P-Daten-Sicherheits-Dienstes in einer IoT-Umgebung, wobei die Vorrichtung über ein Netzwerk mit einer Vielzahl von Geräten verbunden ist, wobei die Vorrichtung umfasst:
einen Prozessor; und
einen Speicher, der durch den Prozessor verbunden ist,
wobei der Speicher durch den Prozessor ausführbare Programmbefehle speichert, um:
ein erstes Gerät durch Austauschen eines Authentifizierungszertifikats und/oder eines einzigartigen Schlüssels mit dem ersten Gerät zu authentifizieren,
einen sicheren Kanal mit dem ersten Gerät aufzubauen, wenn das Authentifizieren abgeschlossen ist,
dem ersten Gerät eine Group-ID und einen Group-Schlüssel zuzuweisen, und
einem von dem ersten Gerät angeforderten zweiten Gerät die Group-ID und den Group-Schlüssel zuzuweisen,
wobei das erste Gerät ein mobiles Endgerät ist und das zweite Gerät ein Haushaltsgerät ist,
wobei dem zweiten Gerät die Group-ID und der Group-Schlüssel zugewiesen werden, wenn das zweite Gerät über ein von dem ersten Gerät gesendetes Token auf die IoT-Plattform zugreift,
wobei das erste Gerät und das zweite Gerät über den Group-Schlüssel verschlüsselte Authentifizierungsdaten senden und empfangen, eine virtuelle Geräte-ID voneinander speichern, wenn die verschlüsselten Authentifizierungsdaten entschlüsselt sind, und über einen P2P-Sitzungs-Schlüssel-Austausch einen sicheren Kanal aufbauen, nachdem sie die virtuelle Geräte-ID gespeichert haben.

10. Gerät, das über ein Netzwerk mit einem Authentifizierungs-Server in einer IoT-Umgebung verbunden ist, wobei das Gerät umfasst:
einen Prozessor; und
einen Speicher, der durch den Prozessor verbunden ist,
wobei der Speicher durch den Prozessor ausführbare Programmbefehle speichert, um:
eine Authentifizierung von dem Authentifizierungs-Server über ein zuvor gespeichertes Authentifizierungszertifikat und/oder einen einzigartigen Schlüssel zu empfangen,
einen sicheren Kanal mit dem Authentifizierungs-Server aufzubauen, wenn die Authentifizierung abgeschlossen ist,
eine Group-ID und einen Group-Schlüssel von dem Authentifizierungs-Server zu empfangen und zu speichern, und
ein Token zu einem anderen Gerät zu senden, um zu erlauben, dass dem anderen Gerät die Group-ID und der Group-Schlüssel von dem Authentifizierungs-Server zugewiesen wird,
wobei das Gerät ein mobiles Endgerät ist und das andere Gerät ein Haushaltsgerät ist,
wobei der Speicher durch den Prozessor ausführbare Programmbefehle speichert, um:
verschlüsselte Authentifizierungsdaten von dem anderen Gerät zu empfangen,
eine virtuelle Geräte-ID des anderen Geräts zu speichern, wenn die verschlüsselten Authentifizierungsdaten entschlüsselt sind, und
über einen P2P-Sitzungs-Schlüssel-Austausch einen sicheren Kanal aufzubauen, nachdem er die virtuelle Geräte-ID gespeichert hat.

## Revendications

1. Procédé pour fournir un service de sécurité des données en peer-to-peer, P2P, dans un environnement d'internet des objets, IoT, entre des dispositifs sur une plateforme IoT connectée par un réseau à une pluralité de dispositifs, la méthode comprenant :
l'authentification d'un premier dispositif par l'utilisation d'au moins un élément entre un certificat d'authenticité et une clé unique du premier dispositif,
l'attribution d'une identité de groupe et d'une clé de groupe au premier dispositif après avoir établi un canal sécurisé avec le premier dispositif quand l'authentification du premier dispositif est achevée et
l'attribution de l'identité de groupe et de la clé de groupe à un deuxième dispositif requis par le premier dispositif, où le premier dispositif est un terminal portable et le dispositif est un appareil ménager,
où l'attribution de l'identité de groupe et de la clé de groupe au deuxième dispositif est réalisée quand le deuxième dispositif accède à la plateforme IoT par le biais d'un jeton envoyé par le premier dispositif,
où le premier dispositif et le deuxième dispositif transmettent et reçoivent des données d'authentification chiffrées au moyen de la clé de groupe, enregistrent l'identité virtuelle du dispositif l'un et de l'autre quand les données d'authentification chiffrées sont déchiffrées et établissent un canal sécurisé par le biais d'un échange de clé de session en P2P après l'enregistrement de l'identité virtuelle du dispositif.

2. Procédé pour fournir un service de sécurité des données en P2P dans un environnement IoT selon la revendication 1, **caractérisé en ce que** l'attribution de l'identité de groupe et de la clé de groupe au premier dispositif est réalisée par le biais d'un échange de clé de session de bout en bout, E2E.

3. Procédé pour fournir un service de sécurité des données en P2P dans un environnement IoT selon la revendication 1, **caractérisé en ce que** l'identité de groupe est une identité de groupe maître et un sous-groupe d'un troisième dispositif pour commander le deuxième dispositif est configuré par un changement dans les réglages d'autorité du premier dispositif.

4. Procédé pour fournir un service de sécurité des données en P2P dans un environnement IoT selon la revendication 1, comprenant en outre, avant l'authentification du premier dispositif :
la vérification d'un jeton provenant du premier dispositif accédant à un serveur d'un fournisseur de service, le jeton étant fourni au premier dispositif par le serveur et
l'envoi du certificat d'authentification au premier dispositif quand la vérification du jeton est achevée.

5. Procédé pour fournir un service de sécurité des données en P2P dans un environnement IoT selon la revendication 1, **caractérisé en ce que** la plateforme IoT comprend un serveur d'authentification et un serveur de téléchargement du certificat, le serveur d'authentification étant configuré pour authentifier le premier dispositif, le serveur de téléchargement du certificat étant configuré pour envoyer un certificat d'authentification au premier dispositif.

6. Procédé pour fournir un service de sécurité des données en P2P dans un environnement IoT selon la revendication 1, **caractérisé en ce que** le deuxième dispositif enregistre un certificat d'authentification, le certificat d'authentification étant attribué auparavant pendant un procédé de fabrication ou fourni par le biais du provisionnement avec la plateforme IoT.

7. Procédé pour fournir un service de sécurité des données en P2P dans un environnement IoT selon la revendication 1, **caractérisé en ce que** le deuxième dispositif est une pluralité de dispositifs situés dans un foyer et commandés par le terminal portable.

8. Programme informatique enregistré dans un milieu contenant une série d'instructions pour mettre en œuvre la méthode selon la revendication 1.

9. Appareil pour fournir un service de sécurité des données en P2P dans un environnement IoT, l'appareil étant connecté par un réseau avec une pluralité de dispositifs, l'appareil comprenant :
un processeur et
une mémoire connectée par le processeur,
où la mémoire enregistre les instructions du programme exécutables par le processeur pour :
l'authentification d'un premier dispositif en échangeant au moins un élément parmi un certificat d'authentification et une clé unique avec le premier dispositif,
l'établissement d'un canal sécurisé avec le premier dispositif quand l'authentification est achevée,
l'attribution d'une identité de groupe et d'une clé de groupe au premier dispositif et
l'attribution de l'identité de groupe et de la clé de groupe à un deuxième dispositif requis par le premier dispositif,
où le premier dispositif est un terminal portable et le deuxième dispositif est un appareil ménager,
où l'identité de groupe et la clé de groupe sont attribuées au deuxième dispositif quand le deuxième dispositif accède à la plateforme IoT au moyen d'un jeton envoyé depuis le premier dispositif,
où le premier dispositif et le deuxième dispositif transmettent et reçoivent des données d'authentification chiffrées au moyen de la clé de groupe, enregistrent l'identité virtuelle du dispositif l'un de l'autre quand les données d'authentification chiffrées sont déchiffrées et établissent un canal sécurisé par le biais d'un échange de clé de session en P2P après l'enregistrement de l'identité du dispositif virtuel.

10. Dispositif connecté sur un réseau avec un serveur d'authentification dans un environnement IoT, le dispositif comprenant :
un processeur et
une mémoire connectée par le processeur,
où la mémoire enregistre les instructions du programme exécutables par le processeur pour :
la réception de l'authentification provenant du serveur d'authentification au moyen d'au moins un élément parmi un certificat d'authentification pré-enregistré et une clé unique,
l'établissement d'un canal sécurisé avec le serveur d'authentification quand l'authentification est achevée,
la réception et l'enregistrement d'une identité de groupe et d'une clé de groupe depuis le serveur d'authentification et
l'envoi d'un jeton à un autre dispositif pour permettre à l'autre dispositif de se voir attribuer l'identité de groupe et la clé de groupe par le serveur d'authentification,
où le dispositif est un terminal portable et l'autre dispositif est un appareil ménager,
où la mémoire enregistre les instructions du programme exécutables par le processeur pour :
la réception des données d'authentification chiffrées à partir de l'autre dispositif,
l'enregistrement d'une identité virtuelle du dispositif de l'autre dispositif quand les données d'authentification chiffrées sont déchiffrées et l'établissement d'un canal sécurisé par le biais d'un échange de clé de session en P2P après l'enregistrement de l'identité virtuelle du dispositif.
